# EUROPEAN PATENT SPECIFICATION

(11) **EP 4 358 486 B1**
(45) Date of publication and mention of the grant of the patent: **02.07.2025**
(21) Application number: 23204285.3
(22) Date of filing: 18.10.2023
(51) Int. Cl.: H04L 45/24, H04L 47/125, H04W 28/08, H04L 49/354, H04L 45/7453, H04L 45/00, H04L 45/12

(54) **LINK AGGREGATION FOR FRONTHAUL**
VERBINDUNGSAGGREGATION FÜR FRONTHAUL
AGRÉGATION DE LIAISONS POUR FRONTHAUL

(30) Priority: 20.10.2022 FI 20225949
(43) Date of publication of application: 24.04.2024
(73) Proprietor: Nokia Solutions and Networks Oy, 02610 Espoo (FI)
(72) Inventor: METSÄLÄ, Esa Markus, Espoo (FI); GEORGE, Jisha, Bangalore (IN); PESONEN, Ari Tapio, Kempele (FI); NATARAJ, Kiran Kumar Mysore, Bangalore (IN)
(74) Representative: Nokia EPO representatives

(56) References cited:
- US-A1- 2022 232 419
- US-B1- 11 234 163
- US-B2- 11 374 865

## Description

### Field

The following exemplary embodiments relate to wireless communication and link aggregation.

### Background

Wireless communication networks, such as cellular communication networks are to reliably cover vast geographical distances. Thus, attaching baseband to fronthaul transport network in a manner that is reliable and resilient as well as load balancing are desirable aspects. Additionally, load balancing is of interest and therefore link aggregation may be used to improve resiliency and load balancing.

US 2022/232419 discloses use of a transport path group for uplink transmission over a fronthaul interface. The transport path group may include addresses of a first and second source ports of a radio unit, addresses of a first and second destination ports of a distributed unit, and/or a flow identifier (e.g., a virtualized local area network). The radio unit may employ load balancing parameters to convey first and second portions of requested user data.

### Brief Description

The scope of protection sought for various embodiments of the invention is set out by the independent claims. The exemplary embodiments and features, if any, described in this specification that do not fall under the scope of the independent claims are to be interpreted as examples useful for understanding various embodiments of the invention.

According to a first aspect there is provided an apparatus comprising means for obtaining an identification of a data traffic for an antenna, associating the obtained identification to a first network identification by deriving the first network identification from the obtained identification, assigning the first network identification and a second network identification to the data traffic, performing load balancing for the data traffic using a hash algorithm, wherein the hash algorithms obtains input based on the first network identifier, and transmitting the data traffic using link aggregation.

In some example embodiments according to the first aspect, the means comprises at least one processor, and at least one memory, including a computer program code, wherein the at least one memory and the computer program code are configured, with the at least one processor, to cause the performance of the apparatus.

According to a second aspect there is provided a method comprising: obtaining an identification of a data traffic for an antenna, associating the obtained identification to a first network identification by deriving the first network identification from the obtained identification, assigning the first network identification and a second network identification to the data traffic, performing load balancing for the data traffic using a hash algorithm, wherein the hash algorithms obtains input based on the first network identifier, and transmitting the data traffic using link aggregation.

In some example embodiments according to the second aspect, the method is a computer-implemented method.

According to a third aspect there is provided a computer program comprising instructions for causing an apparatus to perform at least the following: obtain an identification of a data traffic for an antenna, associate the obtained identification to a first network identification by deriving the first network identification from the obtained identification, assign the first network identification and a second network identification to the data traffic, perform load balancing for the data traffic using a hash algorithm, wherein the hash algorithms obtains input based on the first network identifier, and transmit the data traffic using link aggregation.

### List of Drawings

In the following, the invention will be described in greater detail with reference to the embodiments and the accompanying drawings, in which
FIG. 1 illustrates an exemplary embodiment of a radio access network.
FIG. 2 illustrates an example embodiment of a format for a component extended antenna-carrier.
FIG. 3 illustrates an example embodiment of link aggregation.
FIG. 4 illustrates an example embodiment with active mode link aggregation.
FIG. 5 illustrates an example embodiment of an apparatus.

### Description of Embodiments

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device. The above-described embodiments of the circuitry may also be considered as embodiments that provide means for carrying out the embodiments of the methods or processes described in this document.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, microcontrollers, microprocessors, other electronic units designed to perform the functions described herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via any suitable means. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments described herein may be implemented in a communication system, such as in at least one of the following: Global System for Mobile Communications (GSM) or any other second generation cellular communication system, Universal Mobile Telecommunication System (UMTS, 3G) based on basic wideband-code division multiple access (W-CDMA), high-speed packet access (HSPA), Long Term Evolution (LTE), LTE-Advanced, a system based on IEEE 802.11 specifications, a system based on IEEE 802.15 specifications, and/or a fifth generation (5G), as well as 5G-Advanced (i.e. 3GPP NR Rel-18 and beyond), mobile or cellular communication system. Also, the embodiments described herein may be implemented in a 6G communication system as well. The embodiments are not, however, restricted to the system given as an example but a person skilled in the art may apply the solution to other communication systems provided with necessary properties.

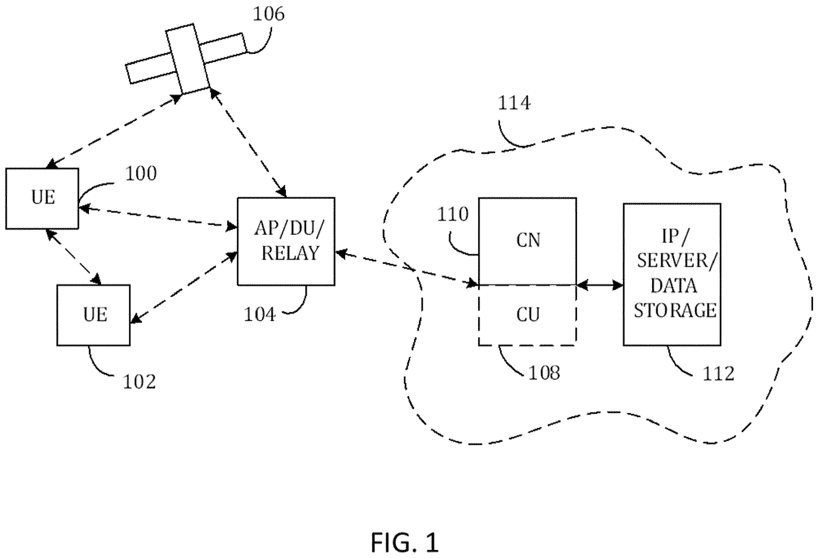

FIG. 1 depicts examples of simplified system architectures showing some elements and functional entities, all being logical units, whose implementation may differ from what is shown. The connections shown in FIG. 1 are logical connections; the actual physical connections may be different. It is apparent to a person skilled in the art that the system may comprise also other functions and structures than those shown in FIG. 1. The example of FIG. 1 shows a part of an exemplifying radio access network.

FIG. 1 shows terminal devices 100 and 102 configured to be in a wireless connection on one or more communication channels in a cell with an access node (such as (e/g)NodeB) 104 providing the cell. The access node 104 may also be referred to as a node. The wireless link from a terminal device to a (e/g)NodeB is called uplink or reverse link and the wireless link from the (e/g)NodeB to the terminal device is called downlink or forward link. It should be appreciated that (e/g)NodeBs or their functionalities may be implemented by using any node, host, server or access point etc. entity suitable for such a usage. It is to be noted that although one cell is discussed in this exemplary embodiment, for the sake of simplicity of explanation, multiple cells may be provided by one access node in some exemplary embodiments.

A communication system may comprise more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The (e/g)NodeB may also be referred to as a base station, an access point or any other type of interfacing device operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side may be a serving gateway (S-GW, routing and forwarding user data packets), packet data network gateway (P-GW), for providing connectivity of terminal devices (UEs) to external packet data networks, user plane function (UPF) for packet routing and forwarding, packet inspection, quality of service (QoS) handling, and external protocol data unit (PDU) session for interconnecting Data Network (DN), in a 5G architecture, access and mobility management function (AMF) for handling connection and mobility management tasks, session management function (SMF) for interacting with a decoupled data plane, creating updating and removing PDU sessions and managing session context with the UPF, or mobile management entity (MME), etc.

The terminal device (also called UE, user equipment, user terminal, user device, etc.) illustrates one type of an apparatus to which resources on the air interface are allocated and assigned, and thus any feature described herein with a terminal device may be implemented with a corresponding apparatus, such as a relay node. An example of such a relay node is a layer 3 relay (self-backhauling relay) towards the base station. Another example of such a relay node is a layer 2 relay. Such a relay node may contain a terminal device part and a Distributed Unit (DU) part. A CU (centralized unit) may coordinate the DU operation via F1AP -interface for example.

The terminal device may refer to a portable computing device that includes wireless mobile communication devices operating with or without a subscriber identification module (SIM), or an embedded SIM, eSIM, including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be an exclusive or a nearly exclusive uplink only device, of which an example is a camera or video camera loading images or video clips to a network. A terminal device may also be a device having capability to operate in Internet of Things (IoT) network which is a scenario in which objects are provided with the ability to transfer data over a network without requiring human-to-human or human-to-computer interaction. The terminal device may also utilise cloud. In some applications, a terminal device may comprise a small portable device with radio parts (such as a watch, earphones or eyeglasses) and the computation is carried out in the cloud. The terminal device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications such as (massive) machine-type communications (mMTC), including vehicular safety, different sensors and real-time control. 5G is expected to have multiple radio interfaces, namely below 6GHz, cmWave and mmWave, and also being integratable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G may require bringing the content close to the radio which may lead to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, and/or utilise services provided by them. The communication network may also be able to support the usage of cloud services, for example at least part of core network operations may be carried out as a cloud service (this is depicted in FIG. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of labour between core network operations and base station operations may differ from that of the LTE or even be non-existent. Some other technology that may be used includes for example Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling or service availability in areas that do not have terrestrial coverage. Satellite communication may utilise geostationary earth orbit (GEO) satellite systems, but also low earth orbit (LEO) satellite systems, for example, mega-constellations. A satellite 106 comprised in a constellation may carry a gNB, or at least part of the gNB, that create on-ground cells. Alternatively, a satellite 106 may be used to relay signals of one or more cells to the Earth. The on-ground cells may be created through an on-ground relay node 104 or by a gNB located on-ground or in a satellite or part of the gNB may be on a satellite, the DU for example, and part of the gNB may be on the ground, the CU for example. Additionally, or alternatively, high-altitude platform station, HAPS, systems may be utilized.

It is to be noted that the depicted system is an example of a part of a radio access system and the system may comprise a plurality of (e/g)NodeBs, the terminal device may have an access to a plurality of radio cells and the system may comprise also other apparatuses, such as physical layer relay nodes or other network elements, etc. At least one of the (e/g)NodeBs may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of FIG. 1 may provide any kind of these cells. A cellular radio system may be implemented as a multilayer network including several kinds of cells. In some exemplary embodiments, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. A network which is able to use "plug-and-play" (e/g)NodeBs, may include, in addition to Home (e/g)NodeBs (H(e/g)nodeBs), a home node B gateway, or HNB-GW (not shown in FIG. 1). A HNB Gateway (HNB-GW), which may be installed within an operator's network may aggregate traffic from a large number of HNBs back to a core network.

As in backhaul, in fronthaul resiliency and load balancing are aspects of great interest and thus improving those is beneficial. Therefore, an active-active mode link aggregation (LAG), may be used in fronthaul transport network for attaching the baseband (BB) to the fronthaul transport network in a resilient manner and also at a radio unit (RU) site for link redundancy in case of a link failure. LAG may also be utilized in intermediate switches in the fronthaul network to improve resiliency and load balancing.

The fronthaul may be based on Ethernet, such as enhanced common public radio interface (eCPRI) Ethernet, link aggregation may be used to allow simultaneous use of multiple links in an all-active configuration. This may be beneficial as links are expensive and ports are scarce meaning that it is efficient to avoid active-passive mode of link aggregation. Also, multiple links may be required due to high capacity in fronthaul. Thus, link aggregation is beneficial when connecting 5G BB, which may mean connecting a virtualized distributed unit (vDU) to a site switch, or to multiple site switches, and then further attaching the site switches to the network, and also, connecting an RU to the network. It is also to be noted that also in in an intermediate transport network there may be switches that utilize LAG for resiliency and load balancing.

Yet, when LAG in utilized in fronthaul, a packet header requires entropy. Medium access control (MAC) and internet protocol (IP) addressed and ports as well as virtual local area network (VLAN) identities (IDs) may be utilized although in Ethernet based fronthaul there may be little or no difference in the header fields. This may be for example because in an RU, the source MAC may be the same for all user (U) and/or control (C) plane traffic when one port is used for all traffic. It is to be noted though that, in some example use cases, multiple MAC addresses may be assigned to the same port, although that solution increases complexity.

Another reason why there may be little or no difference in the header fields may be that the destination MAC may be the same for all U/C plane traffic from the RU to the BB if all data traffic flows are targeting one port in the BB. Yet another reason may be that one VLAN is for one RU and as such configuring multiple VLANs for an RU, although it may be possible, adds configuration effort and would not necessarily be suitable for load balancing in case other load balancing mechanisms are also available. Thus, VLANs may need to be configured for an RU, BB and for each switch along the path.

As there may be little or no difference in the header fields, from one RU towards the BB, and possibly towards the other direction from the BB to RU as well, it may not be possible to distribute the fronthaul traffic flow as there is only one flow for all traffic. The fronthaul may be in accordance with eCPRI or open RAN (O-RAN), or it may be according to a common public radio rnterface (CPRI), or open base station architecture initiative (OBSAI), RU that is carried by Ethernet frames e. g. according to IEEEP1914.3 Radio over Ethernet. If in LAG header fields do not comprise entropy, the active-active mode may turn into an active-passive mode link aggregation as all traffic goes to the same link until other link breaks, which may cause some network capacity to be wasted. In addition, in IP based fronthaul the IP addresses may not provide any more entropy than MAC addresses. Thus, it is desirable to enable introducing entropy to the header fields.

Ethernet QinQ format (IEE802.1 ad) allows multiple VLAN IDs to be inserted into a single frame. Thus, using Ethernet QinQ, two VLAN IDs, an inner VLAN ID and an outer VLAN ID, may be used. The inner VLAN ID, which may also be understood as a first network identification, may be used as a customer C-VLAN, and the outer VLAN ID, which may also be understood as a second network identification, may be used as a service provider S-VLAN. Thus, in some example embodiments, an extended antenna-carrier ID (eAxC ID) may be used in the network that follows the QinQ format to create entropy to packet headers. The extended antenna-carrier (eAxC) allows uniquely associating different data flows, such as spatial data streams, with unique U/C plane endpoint address by using the eAxC ID in combination with transport-based endpoint identifiers to differentiate O-RUs. As such the eAxC may be understood as a data flow for a single antenna, or spatial stream, for single carrier in a single sector. Alternatively, if the fronthaul is in accordance with CPRI/OBSAI, then the antenna carrier structure may be according to the definition for CPRI in the O-RAN control (C)/user (U) plane specification such as 16 bits for defining the following: DU port ID, Bandsector_ID, component carrier (CC)_ID, RU_Port_ID. There may also be 8 bits for defining Sequence_ID, 1 bit for defining E_Bit and 7 bits for defining Sequence_ID. Alternatively, flowID according to a radio over Ethernet protocol (rOE), such as defined by IEEEP1914.3, may be used in case of CPRI.

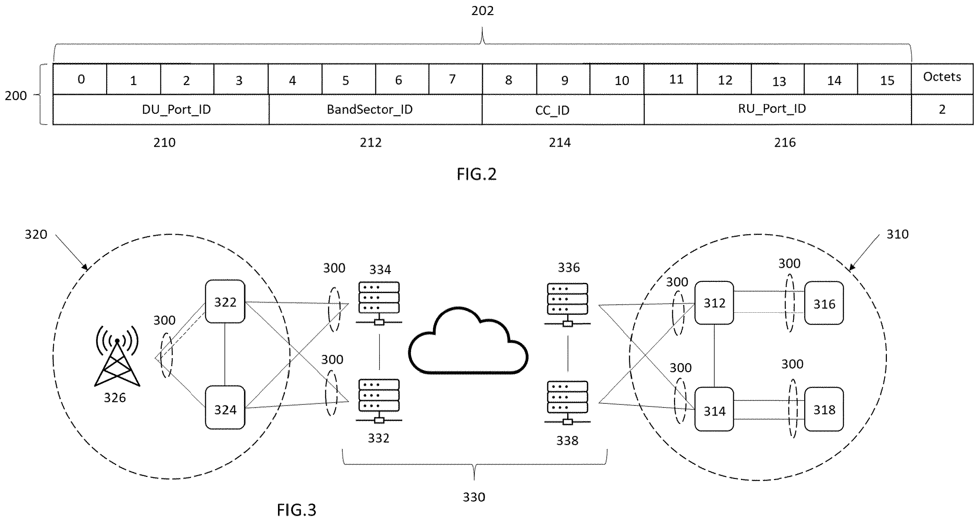

FIG. 2 illustrates an example embodiment of a format 200 for a component eAxC (c_eAxCId). In this format the bit 202 are in such an order that bit 0 is the most significant bit and bit 15 is the least significant bit. The format comprises a DU port ID 210, a band sector ID 212, a carrier component ID 214 and an RU port ID 216. The band sector ID 212 is for indicating an aggregated cell identifier and distinguishes bands and sectors supported by the O-RU. The carrier component ID 214 distinguishes carrier components supported by the O-RU and the RU port ID 216 identifies logical flows, such as data layers or spatial streams, and logical flows, such as separate numerologies (e.g. physical random access channel, PRACH) or signalling channels requiring special antenna assignments such as sounding reference signal (SRS).

One eAxC ID may comprise several c_eAxC IDs that have the same band sector ID, carrier component ID, and RU Port ID, but different values of DU Port ID, which may correlate with different O-DU/gNB processing units. Thus c_eAxC may be understood to define a portion of an eAxC flow assigned to a specific O-DU/gNB processing element. It is to be noted that for one RU, there may be, in some example embodiments, thousands of eAXC IDs, depending on configuration.

FIG. 3 illustrates an example embodiment of link aggregation. In this example embodiment, the link aggregation has active mode and is thus active-active link aggregation. In this example embodiment, a network element may determine a first network identification based on identification of data traffic for an antenna, such as eAxC ID. The data traffic may then be distributed according to characteristics of the traffic traffic such as source MAC, destination MAC, provider VLAN and/or customer VLAN. It is to be noted that in a fronthaul transport network, in this example embodiment, one or more techniques may be used for resiliency and also, the algorithm used for distributing traffic may be utilised by any intermediate switch as well.

In this example embodiment, when the data traffic is in downlink (DL) direction, the network part 310, which comprises network elements such as edge site fronthaul switches 312 and 314 and also the network element 316 that is a DU with virtual baseband unit (vBBU) 316 and the network element 318 that is a DU with a virtual DU (vDU). The links are illustrated by the lines and LAG 300 illustrates that the links are aggregated in an active-active manner, in other words, in an active mode. Optionally, the network element 318, that is the vDU, may also connect via LAG to both of the switches 312 and 314, which may increase resiliency of the switches in the active-active manner. One or both of the network elements 316 and 318 may obtain an eAxC ID for an outgoing data traffic and associate that to the first network identifier, which in this example embodiment is the inner VLAN ID. Associating may also be understood as mapping. This is performed by deriving the inner VLAN ID from the eAXC ID. The second network identifier, which in this example embodiment is the outer VLAN ID and which is assigned to the data traffic, may be used for example as indicating one VLAN for one RU U and/or C plane. LAG 300 is used for the links and traffic is load balanced using a hash algorithm with input from the first network identifier, that is the inner VLAN ID. As the inner VLAN ID has a value that varies with the eAxC ID, the hash algorithm has entropy and may therefore distribute data traffic to link aggregation group member links.

In the uplink UL direction, the same approach may be utilized. In this example embodiment, when UL data traffic may also be transmitted using LAG. The network part 320, comprises radio elements such as a radio unit 326, which may be comprised in an access node such as a gNB, and cell site fronthaul switches 322 and 324. For UL data traffic, the RU 326 may obtain an eAxC ID for an outgoing data traffic and associate that to the first network identifier, which in this example embodiment is the inner VLAN ID. Thus, the RU 326 derives the inner VLAN ID based on the eAXC ID. The second network identifier, which in this example embodiment is the outer VLAN ID, may be used for example as indicating one VLAN for one DU U and/or C plane. LAG 300 is used for the links and traffic is load balanced using hash algorithm with input from the first network identifier, that is the inner VLAN ID. It is to be noted though that between the RU 326 and the switch 322, optionally, there may be multiple ethernet links for LAG (300) as illustrated using a dashed line. It is also to be noted that, alternatively or additionally, also the outer VLAND ID may be used and the eAXC ID may be mapped to the outer VLAN ID.

As mentioned previously, intermediate switches 332, 334, 336 and 338 comprised in the fronthaul transport network 330 may further distribute the data traffic in the same manner by using the inner VLAN ID. Thus, the network as a whole may use LAG for load balancing and resiliency in both UL and DL directions.

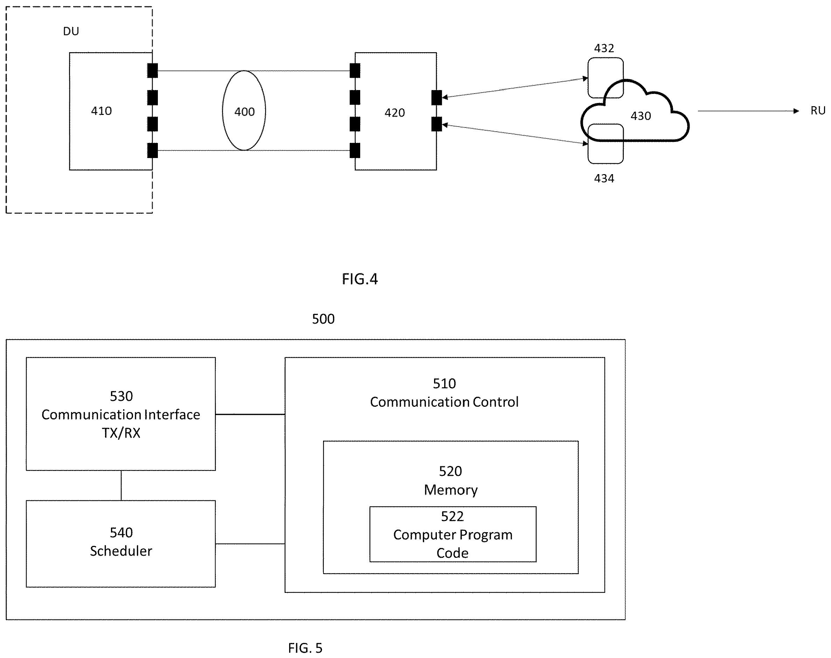

FIG. 4 illustrates another example embodiment with active mode link aggregation. In this example embodiment, Ethernet is used as transport mechanism for U-plane and C-plane messages and messages are transferred over standard Ethernet frames and eCPRI header and payload are comprised within an Ethernet data field. eCPRI U-plane and C-plane share the same VLAN ID that is configured per eAxC, in other words, the same VLAN in configured per CC ID, thus per cell. In this example embodiment, the DU 410 obtains an eAxC ID for the outgoing data traffic and associates that to the first network identifier, which in this example embodiment is the inner VLAN ID. Associating may also be understood as mapping. This is performed by deriving the inner VLAN ID from the eAXC ID. The second network identifier, which in this example embodiment is the outer VLAN ID may be used for example as indicating one VLAN for one RU U and/or C plane. LAG 400 is used for the links and the outgoing data traffic is loadbalanced using hash algorithm with input from the first network identifier, that is the inner VLAN ID. Another network element 420, that is in this example embodiment a multi-layer switch, then forwards the data traffic to the network 430, that may be a time sensitive network, by forwarding the data traffic to the network elements 432 and 434 from which the data traffic is then forwarded to an RU.

As a result, the resiliency from the DU 410 to the first switch 420 may utilize active-active mode of link aggregation. Also, when needed, RU may do active-active load balancing, and also intermediate switches in the network between the BB and RU.

In this example embodiment, dimensioning may be done so that if one link fails, the remaining links may carry an adequate amount of data traffic. It is to be noted that the links may not be fully utilized, and therefore even with little spare capacity the network may work unless it is extremely highly loaded. Optionally, the data traffic may be prioritized with granularity that allows the highest priority data traffic flows to survive even in a reduced capacity scenario, such as a failure of one or more link members.

Also in this example embodiment, the solution described works in the uplink direction as well, and the RU may mark the inner VLAN ID with eAXC ID. This allows the switch close to the Baseband to use the active mode. Further, the RU may additionally attach to the network using active mode link aggregation, when the RU supports the same hashing algorithm as well.

It is to be noted that in the example embodiments described above, optionally, the first network identifier may not need to be unique and it may wrap around if more than a pre-determined amount, for example 4096, IDs are required. The purpose of the first network identifier is to have different values that guide the traffic to different links. It is additionally to be noted that in some example embodiment there may be network elements in an intermediate network that are devices not supporting QinQ. Yet, those network elements may also be used in the fronthaul path as they just see the outer VLAN ID and there is no need for the intermediate network to have many VLANs as the inner VLAN need not be seen at all. Also, in some example embodiments, LAG may be utilized even though an RU and a DU are connected directly to each other without intermediate switches.

In the example embodiments described above, using eAXC ID may be beneficial as the packet sequence number runs per eAXC ID so when eAXC ID flow is kept together as one flow, there will be no frame disorder in normal operation. Additionally, BB and RU may support a small amount of reordering capability to cope with occasional disorder of few frames, that may happen during network failures and re-routing.

In an alternative example embodiment, also the outer VLAN ID may be associated with the eAXC ID. This may be for example in case there is a network design in which the active-active mode is to be performed based on just outer VLAN ID.

It is to be noted that it is envisaged that fronthaul may support security features as well. An example of such security features is medium access control security (MACsec) that defines connectionless data confidentiality and integrity for media access independent protocols. The example embodiments described above may be used with such fronthaul security features as well by supporting frame format that allows VLAN to be in a text format to enable layer 2 (L2) features to be functional as those may rely on tags, that may include the VLAN ID, to be recognized, which may not be the case if those are encrypted. For Example, MACsec may be used with modes in which either outer VLAN is in the clear, or both inner and outer VLAN are in the clear.

In another alternative example embodiment, the same approach as in the previous example embodiments may be used to IP based fronthaul with equal cost multipath (ECMP) forwarding. In this example embodiment, a source user datagram protocol (UDP) field is populated with the eAXC ID value, or it is derived from it. Thus, it may help to assures that an eAXC ID based flow is kept together through the network with no packet disorder, that there is entropy in the source UDP field for network elements such as routers and/or switches to use and that an active-active load balancing works. In this example embodiment it may be adequate that the hashing algorithm uses normal 5-tuple, addresses, ports, protocol, and any router can use ECMP accordingly. Thus, in this example embodiment, the load balancing may be performed for example by using source UDP port for load balancing using ECMP. Alternatively, instead of mapping to source UDP, the eAXC ID may be mapped into an internet protocol version 6 (IPv6) flow label field if IPv6 transport is used. In case an internet protocol security (IPsec) tunnel mode is used, two IPsec tunnels may be used, and the flows may be distributed into these tunnels.

The apparatus 500 of FIG. 5 illustrates an example embodiment of an apparatus that may be an access node or be comprised in an access node. The apparatus may be, for example, a circuitry or a chipset applicable to an access node to realize the described embodiments. The apparatus 500 may be an electronic device comprising one or more electronic circuitries. The apparatus 500 may comprise a communication control circuitry 500 such as at least one processor, and at least one memory 520 including a computer program code (software) 522 wherein the at least one memory and the computer program code (software) 522 are configured, with the at least one processor, to cause the apparatus 500 to carry out any one of the example embodiments of the access node described above.

The memory 520 may be implemented using any suitable data storage technology, such as semiconductor-based memory devices, flash memory, magnetic memory devices and systems, optical memory devices and systems, fixed memory and removable memory. The memory may comprise a configuration database for storing configuration data. For example, the configuration database may store current neighbour cell list, and, in some example embodiments, structures of the frames used in the detected neighbour cells.

The apparatus 500 may further comprise a communication interface 530 comprising hardware and/or software for realizing communication connectivity according to one or more communication protocols. The communication interface 530 may provide the apparatus with radio communication capabilities to communicate in the cellular communication system. The communication interface may, for example, provide a radio interface to terminal devices. The apparatus 500 may further comprise another interface towards a core network such as the network coordinator apparatus and/or to the access nodes of the cellular communication system. The apparatus 500 may further comprise a scheduler 540 that is configured to allocate resources.

Even though the invention has been described above with reference to example embodiments according to the accompanying drawings, it is clear that the invention is not restricted thereto. Therefore, all words and expressions should be interpreted broadly and they are intended to illustrate, not to restrict, the embodiment. It will be obvious to a person skilled in the art that, as technology advances, the inventive concept can be implemented in various ways within the scope of independent claims.

## Claims

1. An apparatus (500) comprising at least means (510, 520, 522) for:
obtaining an identification of a data traffic for an antenna;
associating the obtained identification to a first network identification by deriving the first network identification from the obtained identification;
assigning the first network identification and a second network identification to the data traffic;
performing load balancing for the data traffic using a hash algorithm, wherein the hash algorithm obtains input based on the first network identification; and
transmitting the data traffic using link aggregation, wherein the link aggregation is active mode link aggregation utilized in fronthaul.

2. The apparatus (500) according to claim 1, wherein the identification of a data traffic for an antenna is one of the following: an extended antenna-carrier identification, antenna-carrier identification, and radio over the Ethernet flow ID.

3. An apparatus (500) according to claim 1 or 2, wherein the data traffic is uplink data traffic or downlink data traffic.

4. The apparatus (500) according to any previous claim, wherein the first network identification comprises an identification for an inner virtual local area network and the second network identification comprises an identification for an outer local area network.

5. The apparatus (500) according to claim 4, wherein the second network identification indicates one virtual local area network for one distribute unit U and/or C plane.

6. The apparatus (500) according to any of claims 1 to 3, wherein the first network identification is a source user datagram protocol field, and wherein the apparatus is further caused to perform the load balancing using equal cost multipath forwarding based on a source user data protocol port, or based on an internet protocol version 6 flow label.

7. The apparatus (500) according to any previous claim, wherein the apparatus is further caused to associate the second network identification with the obtained identification.

8. An apparatus (500) according to any previous claim, wherein the link aggregation is dimensioned such that if one link fails, the remaining links transmit at least parts of the data traffic volume intended for the failed link.

9. A method comprising:
obtaining an identification of a data traffic for an antenna;
associating the obtained identification to a first network identification by deriving the first network identification from the obtained identification;
assigning the first network identification and a second network identification to the data traffic;
performing load balancing for the data traffic using a hash algorithm, wherein the hash algorithm obtains input based on the first network identification; and
transmitting the data traffic using link aggregation, wherein the link aggregation is active mode link aggregation utilized in fronthaul.

10. The method according to claim 9, wherein the identification of a data traffic for an antenna is one of the following: an extended antenna-carrier identification, antenna-carrier identification, and radio over the Ethernet flow ID.

11. The method according to claims 9 or 10, wherein the first network identification comprises an identification for an inner virtual local area network and the second network identification comprises an identification for an outer local area network.

12. The method according to any of claims 9 to 11, wherein the first network identifier is a source user datagram protocol field, and wherein the method further comprises performing the load balancing using equal cost multipath forwarding based on a source user data protocol port, or based on an internet protocol version 6 flow label.

13. A computer program comprising instructions, which when executed by an apparatus, causes the apparatus to perform at least the following:
obtain an identification of a data traffic for an antenna;
associate the obtained identification to a first network identification by deriving the first network identification from the obtained identification;
assign the first network identification and a second network identification to the data traffic;
perform load balancing for the data traffic using a hash algorithm, wherein the hash algorithm obtains input based on the first network identification; and
transmit the data traffic using link aggregation, wherein the link aggregation is active mode link aggregation utilized in fronthaul.

## Patentansprüche

1. Vorrichtung (500), die mindestens Mittel (510, 520, 522) für Folgendes umfasst:
Erhalten einer Identifikation eines Datenverkehrs für eine Antenne;
Verknüpfen der erhaltenen Identifikation mit einer ersten Netzwerkidentifikation durch Ableiten der ersten Netzwerkidentifikation von der erhaltenen Identifikation;
Zuweisen der ersten Netzwerkidentifikation und einer zweiten Netzwerkidentifikation zum Datenverkehr;
Durchführen eines Lastausgleichs für den Datenverkehr unter Verwendung eines Hashalgorithmus, wobei der Hashalgorithmus auf Basis der ersten Netzwerkidentifikation eine Eingabe erhält; und
Übertragen des Datenverkehrs unter Verwendung einer Linkaggregation, wobei die Linkaggregation eine Aktivmoduslinkaggregation ist, die beim Fronthaul genutzt wird.

2. Vorrichtung (500) nach Anspruch 1, wobei die Identifikation eines Datenverkehrs für eine Antenne eines von Folgendem ist: einer erweiterten Antennenträgeridentifikation, einer Antennenträgeridentifikation und einer Funk-über-das-Ethernet-Fluss-ID ist.

3. Vorrichtung (500) nach Anspruch 1 oder 2, wobei der Datenverkehr ein Uplinkdatenverkehr oder ein Downlinkdatenverkehr ist.

4. Vorrichtung (500) nach einem der vorhergehenden Ansprüche, wobei die erste Netzwerkidentifikation eine Identifikation für ein inneres virtuelles lokales Netzwerk umfasst und die zweite Netzwerkidentifikation eine Identifikation für ein äußeres lokales Netzwerk umfasst.

5. Vorrichtung (500) nach Anspruch 4, wobei die zweite Netzwerkidentifikation ein virtuelles lokales Netzwerk für eine U- und/oder C-Ebene einer Verteilungseinheit anzeigt.

6. Vorrichtung (500) nach einem der Ansprüche 1 bis 3, wobei die erste Netzwerkidentifikation ein Quellbenutzerdatagrammprotokollfeld ist, und wobei die Vorrichtung ferner veranlasst wird, den Lastausgleich unter Verwendung einer Mehrpfadweiterleitung gleicher Kosten auf Basis eines Quellbenutzerdatenprotokollteils oder eines Internetprotokoll-Version-6-Flow-Labels durchzuführen.

7. Vorrichtung (500) nach einem der vorhergehenden Ansprüche, wobei die Vorrichtung ferner veranlasst wird, die zweite Netzwerkidentifikation mit der erhaltenen Identifikation zu verknüpfen.

8. Vorrichtung (500) nach einem der vorhergehenden Ansprüche, wobei die Linkaggregation derart dimensioniert ist, dass, wenn ein Link ausfällt, die verbleibenden Links mindestens Teile des Datenverkehrsvolumens, das für den ausgefallenen Link vorgesehen ist, übertragen.

9. Verfahren, das Folgendes umfasst:
Erhalten einer Identifikation eines Datenverkehrs für eine Antenne;
Verknüpfen der erhaltenen Identifikation mit einer ersten Netzwerkidentifikation durch Ableiten der ersten Netzwerkidentifikation von der erhaltenen Identifikation;
Zuweisen der ersten Netzwerkidentifikation und einer zweiten Netzwerkidentifikation zum Datenverkehr;
Durchführen eines Lastausgleichs für den Datenverkehr unter Verwendung eines Hashalgorithmus, wobei der Hashalgorithmus auf Basis der ersten Netzwerkidentifikation eine Eingabe erhält; und
Übertragen des Datenverkehrs unter Verwendung einer Linkaggregation, wobei die Linkaggregation eine Aktivmoduslinkaggregation ist, die beim Fronthaul genutzt wird.

10. Verfahren nach Anspruch 9, wobei die Identifikation eines Datenverkehrs für eine Antenne eines von Folgendem ist: einer erweiterten Antennenträgeridentifikation, einer Antennenträgeridentifikation und einer Funk-über-das-Ethernet-Fluss-ID ist.

11. Verfahren nach Anspruch 9 oder 10, wobei die erste Netzwerkidentifikation eine Identifikation für ein inneres virtuelles lokales Netzwerk umfasst und die zweite Netzwerkidentifikation eine Identifikation für ein äußeres lokales Netzwerk umfasst.

12. Verfahren nach einem der Ansprüche 9 bis 11, wobei die erste Netzwerkkennung ein Quellbenutzerdatagrammprotokollfeld ist, und wobei das Verfahren ferner das Durchführen des Lastausgleichs unter Verwendung einer Mehrpfadweiterleitung gleicher Kosten auf Basis eines Quellbenutzerdatenprotokollteils oder eines Internetprotokoll-Version-6-Flow-Labels umfasst.

13. Computerprogramm, das Anweisungen umfasst, die, wenn sie von einer Vorrichtung ausgeführt werden, die Vorrichtung veranlassen, mindestens Folgendes durchzuführen:
Erhalten einer Identifikation eines Datenverkehrs für eine Antenne;
Verknüpfen der erhaltenen Identifikation mit einer ersten Netzwerkidentifikation durch Ableiten der ersten Netzwerkidentifikation von der erhaltenen Identifikation;
Zuweisen der ersten Netzwerkidentifikation und einer zweiten Netzwerkidentifikation zum Datenverkehr;
Durchführen eines Lastausgleichs für den Datenverkehr unter Verwendung eines Hashalgorithmus, wobei der Hashalgorithmus auf Basis der ersten Netzwerkidentifikation eine Eingabe erhält; und
Übertragen des Datenverkehrs unter Verwendung einer Linkaggregation, wobei die Linkaggregation eine Aktivmoduslinkaggregation ist, die beim Fronthaul genutzt wird.

## Revendications

1. Appareil (500) comprenant au moins des moyens (510, 520, 522) pour :
obtenir une identification d'un trafic de données pour une antenne ;
associer l'identification obtenue à une première identification de réseau en dérivant la première identification de réseau de l'identification obtenue ;
attribuer la première identification de réseau et une deuxième identification de réseau au trafic de données ;
réaliser un équilibrage de charge pour le trafic de données à l'aide d'un algorithme de hachage, dans lequel l'algorithme de hachage obtient des éléments d'entrée sur la base de la première identification de réseau ; et
transmettre le trafic de données à l'aide d'une agrégation de liens, dans lequel l'agrégation de liens est une agrégation de liens en mode actif utilisée dans la liaison fronthaul.

2. Appareil (500) selon la revendication 1, dans lequel l'identification d'un trafic de données pour une antenne est l'une des suivantes : une identification d'antenne-porteuse étendue, une identification d'antenne-porteuse, et une ID de flux radio sur Ethernet.

3. Appareil (500) selon la revendication 1 ou 2, dans lequel le trafic de données est un trafic de données de liaison montante ou un trafic de données de liaison descendante.

4. Appareil (500) selon l'une des revendications précédentes, dans lequel la première identification de réseau comprend une identification pour un réseau local virtuel interne et la deuxième identification de réseau comprend une identification pour un réseau local externe.

5. Appareil (500) selon la revendication 4, dans lequel la deuxième identification de réseau indique un réseau local virtuel pour une unité de distribution U et/ou un plan C.

6. Appareil (500) selon l'une des revendications 1 à 3, dans lequel la première identification de réseau est un champ de protocole de datagramme utilisateur source, et dans lequel l'appareil est en outre amené à effectuer l'équilibrage de charge à l'aide d'un transfert par trajets multiples à coût égal sur la base d'un port de protocole de données utilisateur source, ou sur la base d'une étiquette de flux de protocole internet version 6.

7. Appareil (500) selon l'une des revendications précédentes, dans lequel l'appareil est en outre amené à associer la deuxième identification de réseau à l'identification obtenue.

8. Appareil (500) selon l'une des revendications précédentes, dans lequel l'agrégation de liens est dimensionnée de telle sorte que si un lien est défaillant, les liens restants transmettent au moins une partie du volume de trafic de données prévu pour le lien défaillant.

9. Procédé comprenant les étapes suivantes :
obtenir une identification d'un trafic de données pour une antenne ;
associer l'identification obtenue à une première identification de réseau en dérivant la première identification de réseau de l'identification obtenue ;
attribuer la première identification de réseau et une deuxième identification de réseau au trafic de données ;
réaliser un équilibrage de charge pour le trafic de données à l'aide d'un algorithme de hachage, dans lequel l'algorithme de hachage obtient des éléments d'entrée sur la base de la première identification de réseau ; et
transmettre le trafic de données à l'aide d'une agrégation de liens, dans lequel l'agrégation de liens est une agrégation de liens en mode actif utilisée dans la liaison fronthaul.

10. Procédé selon la revendication 9, dans lequel l'identification d'un trafic de données pour une antenne est l'une des suivantes : une identification d'antenne-porteuse étendue, une identification d'antenne-porteuse, et une ID de flux radio sur Ethernet.

11. Procédé selon les revendications 9 ou 10, dans lequel la première identification de réseau comprend une identification pour un réseau local virtuel interne et la deuxième identification de réseau comprend une identification pour un réseau local externe.

12. Procédé selon l'une des revendications 9 à 11, dans lequel le premier identifiant de réseau est un champ de protocole de datagramme utilisateur source, et dans lequel le procédé comprend en outre la réalisation de l'équilibrage de charge à l'aide d'un transfert par trajets multiples à coût égal sur la base d'un port de protocole de données utilisateur source, ou sur la base d'une étiquette de flux de protocole internet version 6.

13. Programme informatique comprenant des instructions, qui, lorsqu'elles sont exécutées pas un appareil, amènent l'appareil à réaliser au moins ce qui suit :
obtenir une identification d'un trafic de données pour une antenne ;
associer l'identification obtenue à une première identification de réseau en dérivant la première identification de réseau de l'identification obtenue ;
attribuer la première identification de réseau et une deuxième identification de réseau au trafic de données ;
réaliser un équilibrage de charge pour le trafic de données à l'aide d'un algorithme de hachage, dans lequel l'algorithme de hachage obtient des éléments d'entrée sur la base de la première identification de réseau ; et
transmettre le trafic de données à l'aide d'une agrégation de liens, dans lequel l'agrégation de liens est une agrégation de liens en mode actif utilisée dans la liaison fronthaul.
